# EUROPEAN PATENT SPECIFICATION

(11) **EP 3 501 027 B1**
(45) Date of publication and mention of the grant of the patent: **27.05.2020**
(21) Application number: 16818997.5
(22) Date of filing: 28.11.2016
(51) Int. Cl.: G21C 9/004, G21C 9/06, G21F 9/02, G21C 19/303, G21C 13/02

(54) **NUCLEAR POWER PLANT, COMPRISING A FILTERED CONTAINMENT VENTING SYSTEM**
KERNKRAFTWERK MIT EINEM GEFILTERTEN EINSCHLUSSENTLÜFTUNGSSYSTEM
CENTRALE NUCLÉAIRE COMPRENANT UN SYSTÈME DE VENTILATION DE CONFINEMENT FILTRÉ

(43) Date of publication of application: 26.06.2019
(73) Proprietor: Framatome GmbH, 91052 Erlangen (DE)
(72) Inventor: HILL, Axel, 64589 Stockstadt (DE)
(74) Representative: Lavoix
(86) International application number: PCT/EP2016/078950
(87) International publication number: WO 2018/095546

(56) References cited:
- JP-A- H04 238 293
- US-A1- 2016 019 987

## Description

The invention relates to a nuclear power plant with a containment and filtered containment venting system.

Prior art document US 2016/0019987 A1 by AREVA GmbH discloses a filtered containment venting system (FCVS) for a containment 4 of a nuclear reactor (see figure). It comprises a pressure relief line 28 leading from inside the containment to the outside. At the entry of the pressure relief line 28 (aka venting line) there is a catalytic recombiner 96 for hydrogen (H2) removal. Further downstream, still inside the containment, the pressure relief line leads into a wet scrubber 36 with washing liquid contained in the bottom region and a gas dome above it. The gas dome is hermetically sealed against the containment, such that during vent operation there is a pressure gradient from the containment atmosphere to the gas dome to the outer environment, driving the venting operation. From the gas dome the pressure relief line 28 proceeds through the containment wall and trough a throttle valve 64 to the outlet at flue 68.

If the washing liquid in the wet scrubber 36 drops below a critical level due to evaporation, re-filing or replenishment takes place automatically. Water from containment sump 100 is drawn into the wet scrubber 36 via supply line 72. Because of the prevailing pressure gradients this is happening in a passive manner.

However, since under severe accident conditions a large amount of heat from the containment atmosphere and from the exothermic reaction at the catalytic recombiner may be transported into the wet scrubber, replenishment via the supply line may not be fast enough to avoid the wet scrubber running dry temporarily, with negative consequences for the retention of radioactive particles.

It is therefore an objective of the present invention to provide a filtered containment venting system for a nuclear power plant of the above mentioned type, comprising a wet scrubber for the venting stream, which reliably avoids the risk of hydrogen detonations, and which avoids the risk of the wet scrubber running dry during venting operation.

This objective is achieved by a nuclear power plant with the features according to claim 1.

Accordingly, the present invention provides a nuclear power plant, comprising a containment and a filtered containment venting system,
- the filtered containment venting system comprising a pressure relief line leading from inside the containment to the outside,
- a catalytic recombiner for hydrogen removal being located at or shortly after the inlet of the pressure relief line and, further downstream, a wet scrubber being switched into the pressure relief line,
- the wet scrubber being located inside the containment and comprising a washing liquid compartment for a washing liquid in it and a gas dome above it, such that during venting operation a venting stream is washed by the washing liquid and then enters the gas dome,
- the gas dome being hermetically sealed against the containment atmosphere,
wherein the washing liquid compartment is part of a larger reservoir located inside the containment, wherein the washing liquid compartment is in flow communication with the rest of the reservoir such that washing liquid lost in the washing liquid compartment due to evaporation is automatically replenished by a liquid in the reservoir, and wherein a cover confining the washing liquid compartment and the gas dome has the shape of a cap or an overturned pot or a bell, partly immersing into the liquid in the reservoir.

Due to the catalytic recombiner at the entry of the pressure relief line, critical hydrogens concentrations further downstream are avoided. In contrast to a wet scrubber with a closed washing liquid tank, in the now-specified configuration in which the wet scrubber is realized as a compartment of a larger reservoir, evaporated washing liquid is automatically replenished quickly, and if needed in large quantities, from the rest of the reservoir. This works reliably even if the venting stream contains overheated portions, leading to a relatively large rate of evaporation of washing liquid.

Preferably, the reservoir is located in a sump of a containment building.

Preferably, the volume of the liquid in the reservoir is at least 50 m³, more preferably at least 100 m³.

Preferably, the ratio A1/A2, relating the surface area A2 of the washing liquid in the washing liquid compartment to the surface area A1 of the liquid in the rest of the reservoir, is in the range of 2 up to 10. This ratio enables a venting mass flow injection into the washing liquid compartment in the range of 0,2 up to 20 kg/s at a flow velocity in the venting line in the range of 0,1 up to 20 m/s.

Preferably, the immersion depth of the compartment wall into the liquid inside the reservoir is in the range of 1,5 h up to 2 h, where h is the immersion depth of the pressure relief line into the liquid, measured at its outlet nozzle.

Preferably, the nuclear power plant comprises a re-circulation line arranged in parallel to the catalytic recombiner, re-circulating a part of the venting stream from the outlet of the catalytic recombiner to its inlet. This feature serves to dilute the venting stream entering the catalytic recombiner with respect to hydrogen in order to limit the thermal load on the subsequent components of the FCVS.

Preferably, a jet pump driven by the venting stream is provided for re-injection of the re-circulated part into the venting stream.

Preferably, downstream of the wet scrubber there is a throttle valve switched into the pressure relief line, designed to be operated in a mode of critical expansion, facilitating a constant volume flow. This concept is explained in more detail in DE 10328773 B3.

Preferably, downstream of the wet scrubber and upstream of said throttle valve there is a filter unit with a molecular sieve or a similar adsorption filter switched into the pressure relief line, mainly for the purpose of iodine retention.

Preferably, the nuclear power plant comprises a branch line branching-off from the pressure relief line and being guided in thermal contact along the molecular sieve, facilitating heating of the molecular sieve.

Preferably, downstream of the wet scrubber there is a cyclone separator and/or a lamella separator switched into the pressure relief line.

Preferably, the wet scrubber comprises a number of Venturi nozzles, immersing at least partly into the washing liquid.

In summary, the present invention provides, among others, the following advantages:
- The venting process can be initiated even if there are large portions of overheated gas or steam within the containment atmosphere, leading to a high-level heat input into the FCVS. Such overheated states within the containment atmosphere may happen, for example, when the nuclear core inside the reactor pressure vessel of the power plant runs dry and begins to interact with the surrounding concrete structures.
- A completely passive cooling system is integrated into the FCVS, utilizing otherwise unused existing large liquid reservoirs as a heat sink, such as a containment sump.
- The liquid in the reservoir also serves as an abundant repository for radioactive activity.
- There is no risk of ignition or detonation within the FCVS due to the entry-side catalytic recombiner. This is true already at startup of the venting process when the venting stream is not (yet) steam-inerted or when such steam-inertisation is lost due to steam condensing within the FCVS.
- The entirety of means for filtering and retention of radioactive activities can be kept within the containment.
- Furthermore, the entire high-pressure section of the FCVS, including a throttle valve for sliding pressure expansion, can be kept within the containment.
- There is no need for a bulky closed container for the wet scrubber, instead a much more compact cap / dome to be immersed into the reservoir is sufficient.
- The FCVS can be retro-fitted to existing nuclear plants.

These and other advantages related to the invention, as well as structural and functional details, will become more apparent in the subsequent detailed description.

Exemplary embodiments of the invention are now discussed with reference to the accompanying drawings.
FIG. 1 provides a schematic overview regarding a first variant of a filtered containment venting system of a nuclear power plant.
FIG. 2 shows a second variant.

Likewise technical elements are designated the same reference numerals in both figures.

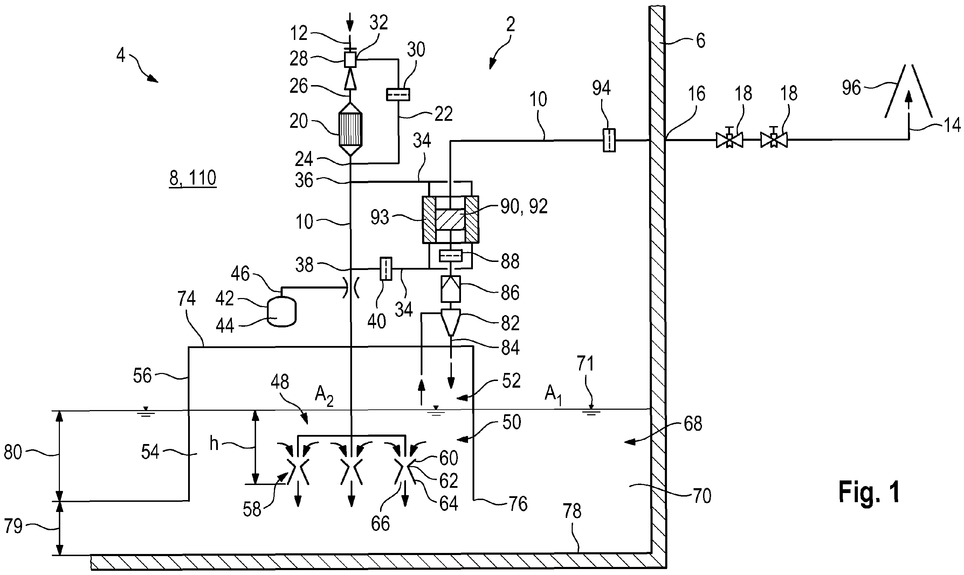

FIG. 1 shows in a schematic manner a filtered containment venting system (FCVS) 2 of a nuclear power plant 4. The nuclear power plant 4 comprises a containment wall 6 which encloses a containment 8, the containment 8 thus being hermetically sealed from the outer environment. In the case of a severe accident with steam release and overpressure conditions within the containment 8, the FCVS 2 is to provide pressure relief for the containment atmosphere 110 by releasing part of it into the outer environment. During pressure relief operation, which is also called venting, filters integrated into the FCVS 2 are configured for retention of aerosols, iodine, iodine compounds, and other radioactive particles contained in the venting stream.

The FCVS 2 comprises a pressure relief line 10, also called venting line, leading from the inlet 12 inside the containment 8 to the outlet 14 outside, thereby passing the containment wall 6 at lead-through 16. During normal operation of the nuclear power plant 4 the pressure relief line 10 is closed by virtue of a number of isolation valves 18 which are preferably located shortly after the containment wall 6, as viewed along the flow direction of the venting stream indicated by arrows. During venting operation the isolation valves 18 are opened, so that a venting stream flows through the pressure relief line 10 from the inlet 12 to the outlet 14, driven (solely) by the prevailing pressure difference.

Shortly after the inlet 12, right at the beginning of the pressure relief line 10 there is a catalytic recombiner 20, also known as a passive autocatalytic recombiner (PAR), switched into the pressure relief line 10. The catalytic recombiner 20 is configured for flameless catalytic recombination of hydrogen and oxygen contained in the venting stream. The purpose of the catalytic recombiner 20 at this point is to prevent a critical concentration of flammable gas mixtures in the subsequent segments of the FCVS 2, regardless of the state and the composition of the containment atmosphere 110.

Furthermore there is a re-circulation line 22 arranged in parallel to the catalytic recombiner 20, branching-off from the pressure relief line 10 at the outlet 24 of the catalytic recombiner 20 and leading back to its inlet 26. The arrangement is such that part of the venting stream with relatively low hydrogen concentration leaving the outlet 24 of the catalytic recombiner 20 is re-circulated to the inlet 26 where it mixes with the incoming venting stream with relatively high hydrogen concentration coming from the inlet 12 of the pressure relief line 10. The re-circulated part of the venting stream is preferably passively re-injected into the venting stream with the help of a jet pump 28 which is driven by the (main) venting stream. That is, the jet-pump 28 is switched into the pressure-relief line 10 upstream of the catalytic recombiner 20 with the re-circulation line 22 being connected to the suction port 32 of the jet-pump. Alternatively, a simple line junction at the inlet side of the catalytic recombiner 20 may be sufficient. In order to compensate for different pressure levels at the inlet 26 and the outlet 24 of the catalytic recombiner 20, there is a throttle valve 30 switched into the re-circulation line 22.

This way, the venting stream is diluted with respect to hydrogen concentration before entering the catalytic recombiner 20. This is done in order to limit the hydrogen concentration at the catalytic recombiner 20 and therefore the thermal load on the catalytic recombiner 20 and the heat input into the subsequent components further downstream in the FCVS 2.

Further downstream there may be a branch line 34, branching-off from pressure relief line 10 at junction 36 and later leading back into it at junction 38, wherein a throttle valve 40 prevents backflow. The hot fluid carried in the branch line 34 can be used for recuperative heating of other components in the FCVS 2, such as a molecular sieve (as discussed below).

Still further downstream there may be a storage container 42 for a chemical reagent 44 attached to the pressure relief line 10 via injection line 46. By injecting a suitable reagent into the venting stream (or alternatively directly into the wet scrubber 48) the pH value of the washing liquid in the wet scrubber 48 further downstream (see below) may be adjusted in an advantageous manner, improving the retention of, in particular, iodine and/or iodine compounds.

Further downstream, the pressure relief line 10 leads into a wet scrubber 48. The wet scrubber 48 is located inside the containment 8 and comprises a washing liquid compartment 50 and a gas dome 52 above it. The washing liquid compartment 50 is filled with a washing liquid 54, in a preferred embodiment basically water. The gas dome 52 is hermetically sealed against the containment atmosphere 110 by a dome-shaped cover 56. The pressure relief line 10 runs into the washing liquid compartment 50 where the venting stream is ejected into the washing liquid 54 by a number of outlet nozzles 58, preferably a plurality of outlet nozzles 58 in a parallel configuration. In a preferred embodiment the outlet nozzles 58 are designed as Venturi nozzles, each having a narrowing inlet section 60, a middle section 62 and a broadening outlet section 64, the outlet 66 preferably pointing downwards into the washing liquid 54. The narrow middle section 60 may comprise a number of inlet apertures for the washing liquid 54 to be entrained by the venting stream. In other words, the arrangement is such that during venting operation the gaseous portion of the ejected venting stream is mixed with and washed by the washing liquid 54 by virtue of the outlet nozzles 58 submerged into the washing liquid 54, and then the gas bubbles rise up through the washing liquid 54 and enter the gas dome 52. Preferably, the outlet nozzles 58 are arranged within a central portion of the washing liquid compartment 50.

In an alternative embodiment the outlet nozzles 58 can be arranged such as to eject the venting stream in an upward direction into either the washing liquid 54 or into the gas dome 52 above it. In this case the middle section 60 of the nozzle tube preferably comprises a number of inlet apertures for the washing liquid 54 to be entrained by and mixed with the venting stream.

The washing liquid compartment 50 is part of a larger reservoir 68 located inside the containment 8, wherein the washing liquid 54 contained in the washing liquid compartment 50 is in flow communication with a liquid 70 contained in the rest of the reservoir 68 (hence, the washing 54 and the liquid 70 are actually the same liquid). Preferably, the reservoir 68 is located in a sump of the containment building, and preferably the total volume of the liquid 70 in the reservoir is in the range of 50 up to 300 m³, in particular at least 100 m³, whereas the volume of the washing liquid 54 in the washing liquid compartment 50 is typically in the range of 10 up to 150 m³. Such an arrangement assures that any washing liquid 54 lost in the washing liquid compartment 50 during venting operation due to evaporation is almost immediately replaced by liquid 70 flowing in from the rest of the reservoir 68. Due to the large volume of liquid 70 in the reservoir 68, the drop of the liquid level 71 in the reservoir 68 and thus in the washing liquid compartment 50 is negligible, even after some hours of venting operation. As a side remark it is noted that during venting operation the liquid level inside the washing liquid compartment 50 is usually somewhat higher than the liquid level 71 outside due to the lower pressure in the gas dome 52 as compared to the pressure of the containment atmosphere 110 (see below). However, for the following considerations this difference can be neglected.

In a preferred embodiment the wall or cover 56 confining the washing liquid compartment 50 and the gas dome 54 has the shape of a cap 74, partly immersing into the liquid 70 in the reservoir 68. Preferably, the flow-through cross section between the washing liquid compartment 50 and the rest of the reservoir 68, which is realized by the peripheral area between the lower edge 76 of the cap 74 and the ground 78 of the reservoir 68, has a gap 79 with a height in the range of 1 up to 5 m. Accordingly, the immersion depth 80 of the compartment wall or cap 74 into the liquid 70 inside the reservoir 68 is preferably somewhat bigger than the immersion depth h of the outlet nozzles 58 into the washing liquid 54. Preferably, the immersion depth 80 is in the range of 1,5 h up to 2 h.

Hence, on the one hand, the gap between the lower edge 76 of the cap 74 and the ground 78 of the reservoir 68 is large enough to realize the above specified flow-through cross section. On the other hand, the immersion depth 80 of the cap 74 is large enough to ensure that most of the ejected gas bubbles gather in the gas dome 52 above and that the immersed state of the cap 74 is maintained when the liquid level 71 in the reservoir 70 drops in the range of, for example, 0,2 up to 1,5 m due to evaporation. This kind of liquid seal (trap) is important in order to maintain the pressure sealing of the gas dome 52 with respect to the containment atmosphere 110, such that a pressure gradient from the containment atmosphere 110 to the gas dome 52 and then to the outer atmosphere is maintained during venting operation. This pressure gradient drives the venting operation in a passive manner without any need for active pumps or the like.

Further downstream the washed and cooled venting stream exits the gas dome 52 and flows through the subsequent parts of the pressure relief line 10. At the beginning of this line section a cyclone separator 82 and/or a lamella separator may be provided in order to remove liquid droplets and mist from the venting stream. The separated liquid portion is led back into the wet scrubber 48 via return line 84. Still further downstream an aerosol filter 86 may be switched into the pressure relief line 10.

Yet further downstream of the wet scrubber 48 there may be a throttle valve 88 switched into the pressure relief line 10 in order to provide expansion drying for the venting stream in connection with a relatively small pressure drop.

Further downstream, but preferably still within the containment 8, there may be an iodine filter 90 switched into the pressure relief line 10 which preferably comprises a molecular sieve 92. As already indicated above, the molecular sieve 92 is preferably heated by a branch of the hot venting stream from the upstream portion of the pressure relief line 10, via heat exchanger 93, in order to avoid condensation of the venting stream. This is to ensure that the sensitive filter materials do not get damaged by liquid droplets and humidity.

Yet further downstream of the wet scrubber 48 and the (optional) iodine filter 90, and preferably still within the containment 8, there is a throttle valve 94 switched into the pressure relief line 10, designed to be operated in a mode of critical expansion (within a sliding pressure regime), facilitating a constant volume flow.

The remaining low-pressure section of the pressure relief line 10 finally passes the containment wall 6 at lead-through 16 and then leads to the exhaust or outlet 14 which is typically at a fume or stack 96.

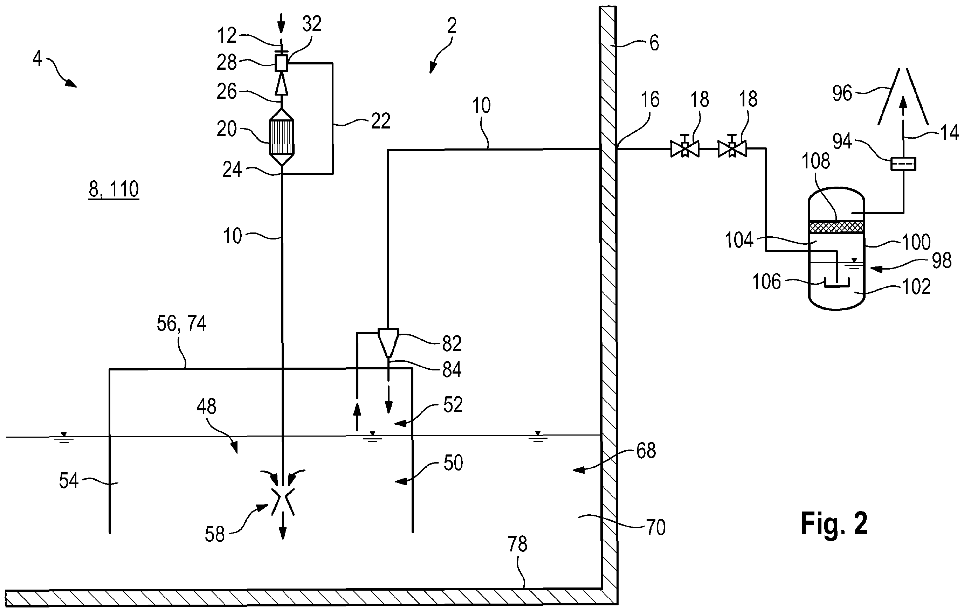

The embodiment shown in FIG. 2 differs from the one in FIG. 1 mainly in that there is an additional wet scrubber 98 switched into the pressure relief line 10 outside of the containment 8. This additional wet scrubber 98 comprises a closed container 100 containing a washing liquid 102 at the bottom and a gas dome 104 above, a number of outlet nozzles 106, preferably Venturi nozzles, ejecting the venting stream into the washing liquid 102 or into the gas dome 104, and a particle filter 108 within the gas dome 104. The purpose of the wet scrubber 48 inside the containment 8 is mainly to cool down or to "quench" the hot venting stream, whereas the primary purpose of the second wet scrubber 98 is to wash the cooled venting stream, thereby achieving retention of radioactive particles within the washing liquid 102.

In the embodiment according to FIG. 2 the first wet scrubber 48 is arranged in a similar manner as the one in FIG. 1, ensuring quick and reliable replenishment of evaporated washing liquid from the surrounding reservoir 70 or basin. The design of the outlet nozzle(s) 58 may be somewhat simpler than in FIG. 1. Because of the initial cooling by the first wet scrubber 48, the rate of evaporation in the second wet scrubber 98 is comparatively low. Hence, it may not be necessary to provide replenishing means for the second wet scrubber 98.

Another difference, as compared to FIG. 1, is that in the embodiment according to FIG. 2 the throttle valve 94 designed for critical expansion is placed at the end of the pressure relief line 10, downstream of the second wet scrubber 98.

A molecular sieve is not shown in FIG. 2 but it may be present too, preferably in a line segment of the pressure relief line 10 downstream of the wet scrubber 98. Other components shown in FIG. 1, such as injection means for a chemical reagent or an aerosol filter may also be present in the system according to FIG. 2, although not shown here.

**List of reference numerals**

| | | | |
|---|---|---|---|
| 2 | FCVS | 64 | outlet section |
| 4 | nuclear power plant | 66 | outlet |
| 6 | containment wall | 68 | reservoir |
| 8 | containment | 70 | liquid |
| 10 | pressure relief line | 71 | liquid level |
| 12 | inlet | 74 | cap |
| 14 | outlet | 76 | edge |
| 16 | lead-through | 78 | ground |
| 18 | isolation valve | 79 | gap |
| 20 | catalytic recombiner | 80 | immersion depth |
| 22 | re-circulation line | 82 | cyclone separator |
| 24 | outlet | 84 | return line |
| 26 | inlet | 86 | aerosol filter |
| 28 | jet pump | 88 | throttle valve |
| 30 | throttle valve | 90 | iodine filter |
| 32 | suction port | 92 | molecular sieve |
| 34 | branch line | 93 | heat exchanger |
| 36 | junction | 94 | throttle valve |
| 38 | junction | 96 | stack |
| 40 | throttle valve | 98 | wet scrubber |
| 42 | storage container | 100 | container |
| 44 | chemical reagent | 102 | washing liquid |
| 46 | injection line | 104 | gas dome |
| 48 | wet scrubber | 106 | nozzle |
| 50 | washing liquid compartment | 108 | particle filter |
| 52 | gas dome | 110 | containment atmosphere |
| 54 | washing liquid | | |
| 56 | cover | h | immersion depth of the outlet nozzles 58 |
| 58 | outlet nozzle | | |
| 60 | inlet section | | |
| 62 | middle section | | |

## Claims

1. Nuclear power plant (4), comprising a containment (8) and a filtered containment venting system (2),
• the filtered containment venting system (2) comprising a pressure relief line (10) leading from inside the containment (8) to the outside,
• a catalytic recombiner (20) for hydrogen removal being located at or shortly after the inlet (12) of the pressure relief line (10) and, further downstream, a wet scrubber (48) being switched into the pressure relief line (10),
• the wet scrubber (48) being located inside the containment (8) and comprising a washing liquid compartment (50) for a washing liquid (54) in it and a gas dome (52) above it, configured such that during venting operation a venting stream is washed by the washing liquid (54) and then enters the gas dome (52),
• the gas dome (52) being hermetically sealed against the containment atmosphere (110),
wherein the washing liquid compartment (50) is part of a larger reservoir (68) located inside the containment (8), and wherein the washing liquid compartment (50) is in flow communication with the rest of the reservoir (68) such that during use washing liquid (54) lost in the washing liquid compartment (50) due to evaporation is automatically replenished by a liquid (70) in the reservoir (68),
**characterised in that** a cover (56) confining the washing liquid compartment (50) and the gas dome (52) has the shape of a cap (74) or an overturned pot or a bell, partly immersing into the liquid (70) in the reservoir (68).

2. Nuclear power plant (4) according to claim 1, wherein the reservoir (68) is located in a sump of a containment building.

3. Nuclear power plant (4) according to claim 1 or 2, wherein the volume of the liquid (70) in the reservoir (68) is in the range of 50 up to 300 m³.

4. Nuclear power plant (4) according to any of the preceding claims, wherein the ratio A1/A2, relating the surface area A2 of the washing liquid (54) in the washing liquid compartment (50) to the surface area A1 of the liquid (70) in the rest of the reservoir (68), is in the range of 2 up to 10.

5. Nuclear power plant (4) according to any of the preceding claims, wherein the pressure relief line (10) has an ejection nozzle (58) immersing into the washing liquid (54) and ejecting the venting stream at immersion depth h, and wherein the immersion depth (80) of the cover (56) into the liquid (70) inside the reservoir (68) is in the range of h times (1,5 up to 2).

6. Nuclear power plant (4) according to any of the preceding claims, wherein the height of the gap (79) between the lower edge (76) of the cap (74) and the ground (78) of the reservoir (70) is in the range of 1 up to 5 m.

7. Nuclear power plant (4) according to any of the preceding claims, comprising a re-circulation line (22) arranged in parallel to the catalytic recombiner (20), re-circulating a part of the venting stream from the outlet (24) of the catalytic recombiner to its inlet (26).

8. Nuclear power plant (4) according to claim 7, wherein a jet pump (28) driven by the venting stream is provided for re-injection of the re-circulated part into the venting stream.

9. Nuclear power plant (4) according to any of the preceding claims, wherein downstream of the wet scrubber (48) there is a throttle valve (94) switched into the pressure relief line (10), designed to be operated in a mode of critical expansion, facilitating a constant volume flow.

10. Nuclear power plant (4) according to any of the preceding claims, wherein downstream of the wet scrubber (48) there is a filter unit with a molecular sieve (92) switched into the pressure relief line (10).

11. Nuclear power plant (4) according to claim 10, comprising a branch line (34) branching-off from the pressure relief line (10) and being guided in thermal contact along the molecular sieve (92), thus heating of the molecular sieve (92).

12. Nuclear power plant (4) according to any of the preceding claims, wherein downstream of the wet scrubber (48) there is a cyclone separator (82) and/or a lamella separator switched into the pressure relief line (10).

13. Nuclear power plant (4) according to any of the preceding claims, wherein the wet scrubber (48) comprises a number of Venturi nozzles, immersing at least partly into the washing liquid (54).

14. Nuclear power plant (4) according to any of the preceding claims, comprising an additional wet scrubber (98) switched into a line segment of the pressure relief line (10) outside of the containment (8)

## Patentansprüche

1. Kernkraftwerk (4), umfassend einen Sicherheitsbehälter (8) und ein System (2) zur gefilterten Druckentlastung des Sicherheitsbehälters,
- wobei das System (2) zur gefilterten Druckentlastung des Sicherheitsbehälters eine Druckentlastungsleitung (10) umfasst, die von der Innenseite des Sicherheitsbehälters (8) an die Außenseite führt,
- wobei sich ein katalytischer Rekombinator (20) zur Entfernung von Wasserstoff an oder kurz nach dem Einlass (12) der Druckentlastungsleitung (10) befindet und wobei weiter stromabwärts ein Nassabscheider (48) in die Druckentlastungsleitung (10) geschaltet ist,
- wobei sich der Nassabscheider (48) innerhalb des Sicherheitsbehälters (8) befindet und ein Waschflüssigkeitsabteil (50) für eine Waschflüssigkeit (54) darin und eine Gaskuppel (52) darüber umfasst, derart konfiguriert, dass während des Druckentlastungsvorgangs ein Druckentlastungsstrom durch die Waschflüssigkeit (54) gewaschen wird und dann in die Gaskuppel (52) eintritt,
wobei die Gaskuppel (52) hermetisch gegen die Sicherheitsbehälteratmosphäre (110) versiegelt ist,
wobei der Waschflüssigkeitsbehälter (50) Teil eines größeren Tanks (68) ist, der sich innerhalb des Sicherheitsbehälters (8) befindet, und wobei das Waschflüssigkeitsabteil (50) in fluidischer Kommunikation mit dem Rest des Tanks (68) ist, so dass während der Verwendung Waschflüssigkeit (54), die im Waschflüssigkeitsbehälter (50) aufgrund der Verdunstung verloren geht, automatisch durch eine Flüssigkeit (70) im Tank (68) aufgefüllt wird,
**dadurch gekennzeichnet, dass** eine Abdeckung (56), die den Waschflüssigkeitsbehälter (50) und die Gaskuppel (52) begrenzt, die Form einer Kappe (74) oder eines umgedrehten Topfs oder einer Glocke aufweist, und teilweise in die Flüssigkeit (70) im Tank (68) eintaucht.

2. Kernkraftwerk (4) nach Anspruch 1, wobei sich der Tank (68) in einer Wanne eines Sicherheitsbehältergebäudes befindet.

3. Kernkraftwerk (4) nach Anspruch 1 oder 2, wobei das Volumen der Flüssigkeit (70) im Tank (68) im Bereich von 50 bis zu 300 m³ beträgt.

4. Kernkraftwerk (4) nach einem der vorhergehenden Ansprüche, wobei das Verhältnis A1/A2, das sich auf die Oberfläche A2 der Waschflüssigkeit (54) im Waschflüssigkeitsabteil (50) zur Oberfläche A1 der Flüssigkeit (70) im Rest des Tanks (68) bezieht, im Bereich von 2 bis zu 10 liegt.

5. Kernkraftwerk (4) nach einem der vorhergehenden Ansprüche, wobei die Druckentlastungsleitung (10) eine Ausstoßdüse (58) aufweist, die in die Waschflüssigkeit (54) eintaucht und den Druckentlastungsstrom bei einer Eintauchtiefe h ausstößt, und wobei die Eintauchtiefe (80) der Abdeckung (56) in die Flüssigkeit (70) innerhalb des Tanks (68) im Bereich von h Mal (1,5 bis zu 2) liegt.

6. Kernkraftwerk (4) nach einem der vorhergehenden Ansprüche, wobei die Höhe des Zwischenraums (79) zwischen der unteren Kante (76) der Kappe (74) und dem Boden (78) des Tanks (70) im Bereich von 1 bis zu 5 m liegt.

7. Kernkraftwerk (4) nach einem der vorhergehenden Ansprüche, umfassend eine Rezirkulationsleitung (22), angeordnet parallel zum katalytischen Rekombinator (20), die einen Teil des Druckentlastungsstroms vom Auslass (24) des katalytischen Rekombinators an seinen Einlass (26) rezirkuliert.

8. Kernkraftwerk (4) nach Anspruch 7, wobei eine Strahlpumpe (28), angetrieben vom Druckentlastungsstrom, zur Wiedereinleitung des rezirkulierten Teils in den Druckentlastungsstrom bereitgestellt ist.

9. Kernkraftwerk (4) nach einem der vorhergehenden Ansprüche, wobei stromabwärts vom Nassabscheider (48) ein Drosselventil (94) vorhanden ist, das in die Druckentlastungsleitung (10) geschaltet ist, welche dazu eingerichtet ist, in einem kritischen Expansionsmodus betrieben zu werden, wodurch ein konstanter Volumenstrom erleichtert wird.

10. Kernkraftwerk (4) nach einem der vorhergehenden Ansprüche, wobei stromabwärts vom Nassabscheider (48) eine Filtereinheit mit einem Molekularsieb (92) vorhanden ist, die in die Druckentlastungsleitung (10) geschaltet ist.

11. Kernkraftwerk (4) nach Anspruch 10, umfassend eine Zweigleitung (34), die von der Druckentlastungsleitung (10) abzweigt und in thermischem Kontakt entlang dem Molekularsieb (92) geführt wird, wodurch das Molekularsieb (92) erhitzt wird.

12. Kernkraftwerk (4) nach einem der vorhergehenden Ansprüche, wobei stromabwärts vom Nassabscheider (48) ein Zyklonabscheider (82) und/oder ein Lamellenabscheider vorhanden ist, der in die Druckentlastungsleitung (10) geschaltet ist.

13. Kernkraftwerk (4) nach einem der vorhergehenden Ansprüche, wobei der Nassabscheider (48) eine Anzahl von Venturidüsen umfasst, die mindestens teilweise in die Waschflüssigkeit (54) eintauchen.

14. Kernkraftwerk (4) nach einem der vorhergehenden Ansprüche, umfassend einen zusätzlichen Nassabscheider (98), der in einen Leitungsabschnitt der Druckentlastungsleitung (10) außerhalb des Sicherheitsbehälters (8) geschaltet ist.

## Revendications

1. Centrale nucléaire (4), comprenant une enceinte de confinement (8) et un système (2) de dépressurisation filtrée de l'enceinte de confinement,
- le système (2) de dépressurisation filtrée de l'enceinte de confinement comprenant une conduite de décompression (10) menant de l'intérieur de l'enceinte de confinement (8) vers l'extérieur,
- un recombineur catalytique (20) destiné à l'élimination d'hydrogène, étant situé au niveau de l'entrée (12) de la conduite de décompression (10) ou peu après et, plus loin en aval, un épurateur par voie humide (48) étant disposé dans la conduite de décompression (10),
- l'épurateur par voie humide (48) étant situé à l'intérieur de l'enceinte de confinement (8) et comprenant un compartiment de liquide de lavage (50) destiné à un liquide de lavage (54) dans ce dernier et un dôme de gaz (52) au-dessus de lui, configuré de telle sorte qu'au cours de l'opération de dépressurisation, un flux de dépressurisation est lavé par le liquide de lavage (54) et pénètre ensuite dans le dôme de gaz (52),
- le dôme de gaz (52) étant hermétiquement étanche par rapport à l'atmosphère de confinement (110),
dans laquelle le compartiment de liquide de lavage (50) fait partie d'un réservoir plus grand (68) situé à l'intérieur de l'enceinte de confinement (8), et dans laquelle le compartiment de liquide de lavage (50) est en communication fluidique avec le reste du réservoir (68) de telle sorte qu'au cours de l'utilisation, le liquide de lavage (54) perdu dans le compartiment de liquide de lavage (50) du fait de l'évaporation est automatiquement renouvelé par un liquide (70) dans le réservoir (68),
**caractérisé en ce que**
un couvercle (56) confinant le compartiment de liquide de lavage (50) et le dôme de gaz (52) a la forme d'un chapeau (74) ou d'un pot renversé ou d'une cloche, partiellement immergé(e) dans le liquide (70) du réservoir (68).

2. Centrale nucléaire (4) selon la revendication 1, dans laquelle le réservoir (68) est situé dans un puisard d'une enceinte de confinement.

3. Centrale nucléaire (4) selon la revendication 1 ou 2, dans laquelle le volume du liquide (70) dans le réservoir (68) est compris dans la plage de 50 à 300 m³.

4. Centrale nucléaire (4) selon l'une quelconque des revendications précédentes, dans laquelle le rapport A1/A2, reliant l'aire A2 de la surface du liquide de lavage (54) dans le compartiment de liquide de lavage (50) à l'aire A1 de la surface du liquide (70) dans le reste du réservoir (68), est compris dans la plage de 2 à 10.

5. Centrale nucléaire (4) selon l'une quelconque des revendications précédentes, dans laquelle la conduite de décompression (10) possède une buse d'éjection (58) immergée dans le liquide de lavage (54) et éjectant le flux de dépressurisation à une profondeur d'immersion h, et dans laquelle la profondeur d'immersion (80) du couvercle (56) dans le liquide (70) à l'intérieur du réservoir (68) est compris dans la plage de h fois (1,5 à 2).

6. Centrale nucléaire (4) selon l'une quelconque des revendications précédentes, dans laquelle la hauteur de l'espace (79) entre le bord inférieur (76) du chapeau (74) et le fond (78) du réservoir (70) est compris dans la plage de 1 à 5 m.

7. Centrale nucléaire (4) selon l'une quelconque des revendications précédentes, comprenant une conduite de recirculation (22) agencée en parallèle au recombineur catalytique (20), remettant en circulation une partie du flux de dépressurisation de la sortie (24) du recombineur catalytique vers son entrée (26).

8. Centrale nucléaire (4) selon la revendication 7, dans laquelle une pompe à jet (28) entraînée par le flux de dépressurisation est prévue pour la réinjection de la partie remise en circulation dans le flux de dépressurisation.

9. Centrale nucléaire (4) selon l'une quelconque des revendications précédentes, dans laquelle, en aval de l'épurateur par voie humide (48), se trouve une soupape d'étranglement (94) disposée dans la conduite de décompression (10), et conçue pour être actionnée dans un mode de dilatation critique, facilitant un débit volumétrique constant.

10. Centrale nucléaire (4) selon l'une quelconque des revendications précédentes, dans laquelle, en aval de l'épurateur par voie humide (48), se trouve un élément filtrant doté d'un tamis moléculaire (92) disposé dans la conduite de décompression (10).

11. Centrale nucléaire (4) selon la revendication 10, comprenant une conduite secondaire (34) bifurquant à partir de la conduite de décompression (10) et étant guidée en contact thermique le long du tamis moléculaire (92), chauffant ainsi le tamis moléculaire (92).

12. Centrale nucléaire (4) selon l'une quelconque des revendications précédentes, dans laquelle, en aval de l'épurateur par voie humide (48), se trouve un séparateur cyclone (82) et/ou un séparateur à lamelles disposé dans la conduite de décompression (10).

13. Centrale nucléaire (4) selon l'une quelconque des revendications précédentes, dans laquelle l'épurateur par voie humide (48) comprend une pluralité de buses Venturi, immergées au moins partiellement dans le liquide de lavage (54).

14. Centrale nucléaire (4) selon l'une quelconque des revendications précédentes, comprenant un épurateur par voie humide (98) supplémentaire disposé dans un segment de conduite de la conduite de décompression (10) à l'extérieur de l'enceinte de confinement (8).
